# EUROPEAN PATENT SPECIFICATION

(11) **EP 1 429 514 B1**
(45) Date of publication and mention of the grant of the patent: **13.02.2008**
(21) Application number: 02293037.4
(22) Date of filing: 09.12.2002
(51) Int. Cl.: H04L 29/06

(54) **Internet protocol mobility supporting method, a related system and related devices**
Verfahren zur Unterstützung der IP-Mobilität, dazugehöriges System und dazugehörige Vorrichtungen
Méthode de support de mobilité IP, système et dispositifs associés

(43) Date of publication of application: 16.06.2004
(60) Divisional application: 05076857.1
(73) Proprietor: Alcatel Lucent, 75008 Paris (FR)
(72) Inventor: De Vriendt, Johan André, 9051 Afsnee (BE); Van Doorselaer, Bart Alfons Peter, 9090 Melle (BE); Choyi, Vinod Kumar, Plano, Texas 75075 (US)
(74) Representative: Narmon, Gisèle Marie Thérèse

(56) References cited:
- WO-A-99/31853
- US-A- 6 137 791
- ROBERT L ET AL: "Third generation wireless network: the integration of GSM and mobile IP" IEEE, XP010532733
- PERKINS C E ET AL: "DHCP for mobile networking with TCP/IP" PROCEEDINGS IEEE INTERNATIONAL SYMPOSIUM ON COMPUTERS AND COMMUNICATIONS, XX, XX, 27 June 1995 (1995-06-27), pages 255-261, XP002132695

## Description

The present invention relates to an IP mobility supporting method in a mobile IP network.

Such an Internet Protocol mobility supporting method, system and related devices are already known in the art, e.g. from *"Internet Engineering Task Force (IETF) Request for comments with title "Internet Protocol mobility support for IPv4" with reference RFC 3220" edited by C. Perkins of the Nokia Research Centre and published in January 2002* ".

Therein, it is described that the support of macro-mobility can be dealt with using Mobile Internet Protocol (MIP) as specified in IETF. Mobile IP MIP here defines 3 additional network elements, i.e. the Home Agent HA in the home network, the Foreign Agent FA in the foreign network and the Mobile Node.

The Home Agent is a router on a Mobile Node's home network, which tunnels datagrams for delivery to the Mobile Node when it is away from home. The home agent also maintains current location information for the Mobile Node when the Mobile Node is outside its home network. The Foreign Agent is an agent on a Mobile Node 's visited network that provides routing services to the Mobile Node while the mobile node is registered with it. The foreign agent de-tunnels and delivers datagrams to the Mobile Node that were tunnelled by the Mobile Node's home agent. For datagrams sent by a Mobile Node, the Foreign Agent may serve as a default router for registered Mobile Nodes.

A Mobile Node is given a long-term IP address on a home network called the Mobile Node home address. This home address is administered in the same way as a "permanent" IP address is provided to a stationary host. When away from its home network, an additional visitor address (an address belonging to the foreign network) called the "care-of address" (CoA) is associated with the Mobile Node and reflects the Mobile Node's current point of attachment with the visited network. The Mobile Node uses its home address as the source address of all IP datagrams that it sends.

Packets destined for a Mobile Node MN are always addressed to the Mobile Node home IP address. If the Mobile Node MN is not within the home network but in a visited network, then the Home Agent, that is aware of the location (Care-of Address) of the Mobile Node, forwards the packets through a tunnel to the Foreign Agent FA of the visited network, and the Foreign Agent FA in the end delivers the packets to the Mobile Node MN.

If such a so called visited network however does not support the Mobile Internet Protocol (MIP), i.e. does not provide with a Foreign Agent (FA), a mobility supporting service cannot be provided with.

An object of the present invention is to provide an IP mobility supporting method, system and related devices in a mobile IP network of the above known type but wherein performant mobility is supported without the presence of mobility support in the visited network.

According to the invention, this object is achieved by the method described in claim 1, the system defined in claim 2 and related devices as described in claims 5, 6, 7, 8, 9, 10.

Indeed, according to the invention, this object is achieved due to the fact that the Mobile Node roaming from a Home Network towards the Visited Network at the request of the Mobile Node, is assigned a Foreign Agent externally to the Visited Network, i.e. in the Home network or even in a related broker network. Then a path can be established between the Home Agent and the assigned Foreign Agent. Subsequently, the Foreign Agent is enabled to establish a path between the Foreign Agent and the Mobile Node based on the destination address provided to the Foreign agent by the Mobile Node.

Data received by the home agent from a corresponding node addressing the mobile node can be forwarded by the home agent along the previously established path from the receiving home agent towards the Mobile Node via the foreign agent.

An additional characteristic feature of the present invention is defined in the system as described in claim 3 and the related device as described in claim 11.

The destination address is an Internet Protocol address of the Mobile Node, which is temporary, assigned to the Mobile Node by a Dynamic Host Control Protocol server of the visited network. Hence, by using this temporary assigned Internet Protocol address of the Mobile Node, a direct path between the Foreign Agent and the Mobile Node can be established.

An additional advantage of such a method of establishing a path involving the use of a Foreign Agent externally to the Visited Network, i.e. in the Home network or even in a related broker network, as above described, is that at the move of the Mobile Node to the coverage of a different Visited Network, the Mobile Node does not have to inform the Home Agent of its immediate location, but only the Foreign Agent is informed about its latest location. As the foreign agent can be placed somewhere closer to the Mobile Node, i.e. in the Home Network or even in a related broker network adjacent to the Visited Network the distance between the Mobile Node and the Foreign Agent is smaller when compared to the distance between the Mobile Node and the Home Agent and as a consequence, the time necessary for data to reach the Foreign Agent is reduced. Hence, by placing the Foreign Agent, closer to the Mobile Node, the registration latency is reduced and thus the Foreign Agent is able to react much faster when a Mobile Node handoffs to a different Visited Network and thereby reducing the packet losses due to handoffs.

This in contrast to the situation wherein the Home Agent is updated about the latest care-of-address of the mobile node during the handoff but due to the larger distance between the Home Agent and the Mobile Node, and as a consequence the larger time required to inform the Home Agent of the new Care-of address. In the mean time, during the registration process the Home Agent keeps sending packets to the Mobile Node's old care-of-address because of the latency that is involved in updating the Home Agent about the new address. Since the Mobile Node moved to a different Visited Network it is not able to receive these packets which leads to loss of packets.

Another characteristic feature of the present invention is defined in the system as described in claim 4 and the related devices as described in claim 12.

The destination address is the Internet protocol address of an Access Router AR at the edge of the visited network. Hence, by using this temporary Internet protocol address, , a path between the Foreign Agent and the Access Router can be established and moreover the Access Router is enabled to establish a path between this Access Router and the Mobile Node (MN) based on the forwarding information which is provided to said Access Router by the Mobile Node. An additional advantage of such a method of establishing a path involving the use of an Foreign Agent and the Access Router as above described, is that at the move of the Mobile Node to the coverage of a different Visited Network, the mobile node does not need to inform the Home Agent of its immediate location but only has to inform the Foreign Agent about its latest location. This Foreign Agent works like an anchor thus reducing the registration latencies.

A further additional advantage of the method of establishing a path involving the use of an Foreign Agent and the Access Router as above described, is that no additional temporary Internet Protocol address needs to be assigned to the Mobile Node as the Access Router is kept posted with respect to the location of the Mobile Node in the Visited Network The Mobile Node's home Internet Protocol address should be used to address the Mobile Node. Moreover, since the Access Router de-tunnels the tunnelled datagrams sent by the Foreign Agent, before the packets are sent over the radio to the Mobile Node by the Access Router, the datagrams that are sent over the radio are not encapsulated by an extra header and thus saving precious radio resources.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a Mobile Internet Protocol Network MIPN wherein the Internet Protocol mobility supporting method is executed.
Fig. 2 represents the functional built up of the Mobile Node and the Home Agent of the present invention for use in Mobile Internet Protocol Network MIPN as presented in Fig. 1.

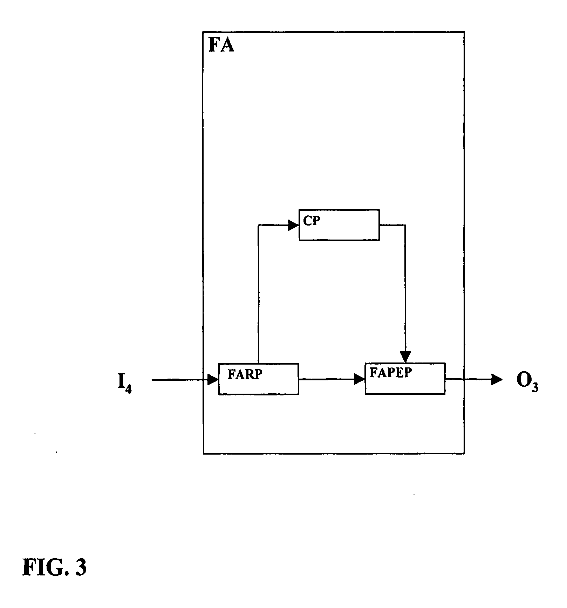

Fig. 3 represents the functional built up of The Foreign Agent, of the Mobile Internet Protocol Network MIPN as presented in Fig. 1.

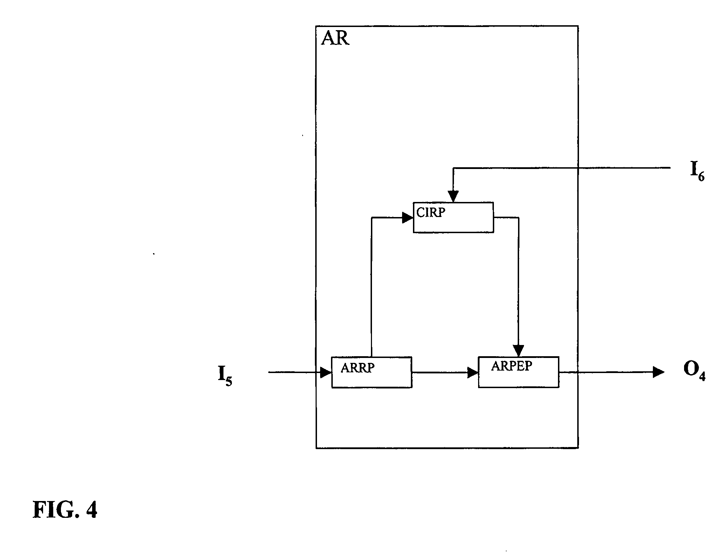

Fig. 4 represents the functional built up of The Access Router of the Mobile Internet Protocol Network MIPN as presented in Fig. 1.

In the following paragraphs, referring to the drawings, a first and a second implementation of the Internet Protocol mobility supporting method and the related devices according to the present invention is described. The description of the first embodiment is completed with a description of the second embodiment in the same manner as is done for the first embodiment.

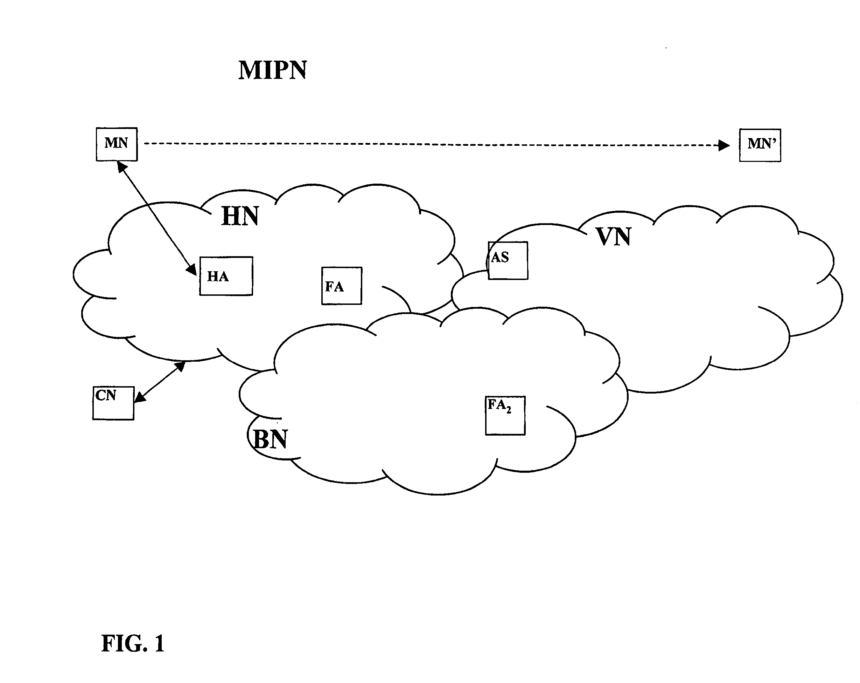

In the first paragraph of this description the main elements of the Mobile Internet protocol Network as presented in FIG. 1 are described. In the second paragraph, all connections between the before mentioned elements and described parts are defined. Subsequently all relevant functional parts of the are described followed by a description of all interconnections. In the succeeding paragraph the actual execution of the method for session establishment is described. This description is completed with a description of a second embodiment in the same manner as is done for the first embodiment.

The Mobile Internet Protocol Network MIPN of Fig. 1 comprises a Home Network HN, a kind of Visited Network VN and a Broker Network BN related to the Home Network HN. The Home Network is a Mobile Internet Protocol supporting Network whereto the Mobile Node is connected. The Broker Network is a Mobile Internet Protocol supporting Network, which is not the home network but is a network, which is coupled to the Home Network HN by agreement between to corresponding providers of the network. The Visited Network VN is a Network which has no Mobile Internet protocol Supporting facilities (Mobile Internet Protocol further referred to as MIP) and hence does not support roaming from the Home Network HN or the Broker Network BN towards the Visited Network VN. Although there exist a plurality of kind of visited Networks and Broker Networks, only one of both is presented and described in order to keep simplicity in the description.

The Home Network HN includes a Home Agent HA which is a router on the Mobile Node's Home Network, which forwards datagrams to the Mobile Node when it is away from home. The Home Agent HA also maintains current location information for the Mobile Node when the Mobile Node is outside its Home Network HN. The Home Agent is able to establish a path between the home agent HA and the Foreign Agent FA based on a Foreign Agent address.

Further, the Home Network HN contains a Foreign Agent FA which is implemented on a router that is able to establish a path between the Foreign Agent FA and the Mobile Node MN based on a temporary Internet Protocol Address assigned to the Mobile Node MN which is provided to the Foreign Agent FA via the Mobile Node MN. The Foreign agent FA provides routing services to the Mobile Node MN while the mobile node is registered with it. The Foreign Agent FA de-tunnels the datagrams tunnelled to it by the Mobile Node's Home Agent and delivers datagrams to the Mobile Node MN by using a tunnel that was set-up by the Foreign Agent between the Foreign Agent FA and the Mobile Node's temporary Internet Protocol Address. For datagrams sent by a Mobile Node MN, the Foreign Agent FA may serve as a default rout for registered Mobile Nodes.

In order to keep simplicity in the description of this embodiment, it is chosen to only describe two Foreign Agents FA, FA2 connected to the network, although this normally will be a plurality of such Foreign Agents. A first Foreign Agent FA is present in the Home Network HN and the second Foreign Agent FA2 is present in Broker Network BN.

Additionally there is a plurality of Mobile Nodes, whereof only one Mobile Node MN is presented and described respectively in the figure and corresponding text in order to keep simplicity in the description. Mobile Node MN is a Mobile Internet Protocol compliant Node able to roam through the Mobile Internet Protocol Network MIPN for so far that Mobile Internet Protocol is supported in the network.

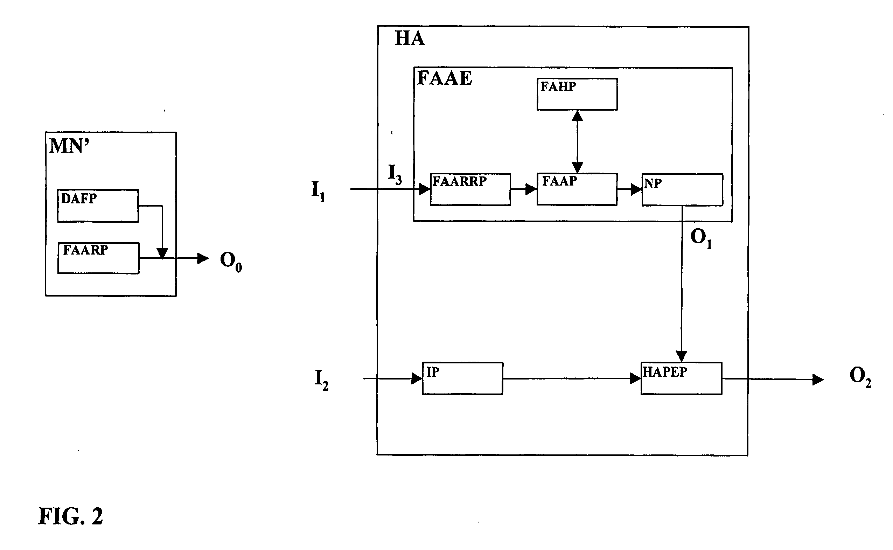

The most relevant parts of this Mobile Node MN, as presented in Fig. 2 is the Foreign Agent Assignment requesting part FAARP that is able to request, at detection of entry of the Mobile Node MN in the Visited Network VN, the Foreign Agent assigning entity FAAE of the Home network HN to assign a Foreign Agent FA to the Mobile Node MN. Further there is a part that is adapted to request a Dynamic Host Control protocol Server for a temporary Internet Protocol address (which is not shown) and a reception part (not shown) that is adapted to receive the temporary Internet Protocol address and additionally there is a Destination Address Forwarding Part DAFP adapted to forward, at roaming of the Mobile Node from said Home Network HN to the visited network VN1, a destination address towards the home agent HA,

The Foreign Agent Assignment requesting part FAARP has an output-terminal that is at the same time an output-terminal O₀ of Mobile Node MN. The output-terminal of the Destination Address Forwarding Part DAFP is also coupled to output-terminal O₀ of Mobile Node MN.

The main elements of the Home Agent HA as presented in FIG.2 are the Foreign Agent Assigning Entity FAAE that is able to assign a Foreign Agent to the Mobile Node which is moving to the Visited Network VN, the Home Agent Path Establishing Part HAPEP which is adapted to establish a path, for instance a tunnel, between the home agent HA and the assigned Foreign Agent FA and the Intercepting Part IP that is able to intercept data destined for the Mobile Node MN.

The Foreign Agent Assigning Entity FAAE has an input-terminal I₃ that is at the same time an input-terminal I₁ of Mobile Home Agent. The Intercepting part IP has an input-terminal that is at the same time an input-terminal I₂ of Mobile Home Agent. The Intercepting part IP further has an output-terminal that is coupled to an input-terminal of the Home Agent Path Establishing Part HAPEP that has an output-terminal that is at the same time an output-terminal O₂ of the Home Agent HA. Moreover, the Foreign Agent Assigning Entity FAAE has an output-terminal that is coupled to an input-terminal of the Home Agent Path Establishing Part HAPEP.

The Foreign Agent assigning entity FAAE as is presented in FIG. 2 is built up of a Foreign Agent Assignment request reception part FAARRP, that is adapted to receive a request for service of a Foreign Agent FA sent by the Mobile Node MN, a Foreign Agent Assigning part FAAP, that is able to assign a Foreign Agent to the Mobile Node MN at reception of the request for service of a foreign agent FA of the Mobile Node MN and a notification part NP, for notifying the Foreign Agent FA of an assignment of the Foreign Agent FA for providing Foreign Agent service to the Mobile Node MN.

The Foreign Agent Assignment request reception part FAARRP, has an input-terminal that is at the same time an input-terminal I₃ of the Foreign Agent Assigning Entity FAAE. The Foreign Agent Assignment Request Reception Part FAARRP further has an output-terminal that is coupled to an input-terminal of the Foreign Agent Assigning part FAAP, which in its turn has an output-terminal that is coupled to an input-terminal of the Notification Part NP. The Notification Part NP has an output-terminal that is at the same time an output-terminal O₁ of the Foreign Agent Assigning Entity FAAE.

The Foreign Agent FA in its turn is built up of a Foreign Agent Reception Part FARP, which is adapted to receive data sent by the Home Agent HA and for instance de-tunnel the received data, a Control Part CP that is able to determine a destination address from the data sent by the home agent HA and a Foreign Agent Path Establishing Part FAPEP, for establishing a path, for instance by tunneling, between this Foreign Agent FA and the Mobile Node MN based on the destination address.

The Foreign Agent Reception Part FARP has an input-terminal that is at the same time an input-terminal I₄ of the Foreign Agent FA. This Foreign Agent Reception Part FARP has an output-terminal that is coupled to an input-terminal of the Control Part CP which in its turn is coupled with an input-terminal to an output-terminal of the Foreign Agent Path Establishing Part FAPEP. This Foreign Agent Path Establishing Part FAPEP has an output-terminal which is at the same time an output-terminal O₃ of Foreign Agent FA.

Moreover, there is data connection between the Foreign Agent Reception Part FARP and the Foreign Agent Path Establishing Part FAPEP.

In order to explain the operation of the present invention it is assumed that the Mobile Node MN moves from the Home Network HN (see dashed line between MN and MN' in Fig. 1 (where MN' stands for the second location in the Visited Network VN)) towards the Visited network VN. At roaming from the Home Network HN towards the Visited Network, the Mobile Node MN acquires a temporary Internet Protocol address in the Visited Network assigned by the Dynamic Host Control Protocol DHCP (Not shown). Mobile node MN detects that the Visited network VN does not support the Mobile Internet Protocol by the absence of Foreign Agent Advertisements within a given period. The Foreign Agent Assignment requesting part FAARP of the Mobile Node MN, at detection of entry of the Mobile Node MN in the Visited Network VN requests the Foreign Agent Assigning Entity FAAE of the Home network HN to assign a Foreign Agent FA to the Mobile Node MN. This request consists of a Mobile Internet Protocol registration request, further referred to as MIP registration request, with an extension for Foreign Agent service request by the Mobile Node. The temporary assigned Internet Protocol address, forwarded by the Destination address Forwarding Part is used as the source address of the registration request message.

Subsequently, the Foreign Agent Assignment request reception part FAARRP, receives the request for service of a Foreign Agent FA and forwards the request to the Foreign Agent Assigning part FAAP that on receiving the registration request and after having authenticated the Mobile Node, processes the Foreign Agent request extension. The Home Agent HA then allocates Foreign Agent FA of the Home Network HN to the mobile Node MN. The assignment of Foreign Agent FA2 in the Broker Network would have been equally suitable.

The Foreign Agent Assigning part FAAP may by default use a static Foreign Agent for assignment at request but may alternatively consult a list of foreign Agents to be assigned. This list may be stored in a Foreign Agents table in the Foreign Agent Holding Part FAHP of the Home Agent HA. The Foreign Agent that is assigned could be chosen such that the Foreign Agent is as close to the Mobile Node as possible.

Alternatively, the Foreign Agent Assigning Entity FAAE may assign a Foreign Agent provided by an Authorisation Authentication Accounting-Server forming part of the Home Network HN This server may be a Server that implements the Diameter protocol or the RADIUS protocol or some other Dynamic Agent assigning server. There may even be a combination of a first Foreign Agent Assigning Entity FAAE in the Home Agent HA and a second Foreign Agent Assigning Entity FAAE may be located within a network element belonging to the Home Network outside of the Home Agent (e.g. Authorisation Authentication Accounting-Server). The Foreign Agent Assigning Entity FAAE may be located in a network element belonging to the Home Network outside of the Home Agent (eg. Authorisation Authentication Accounting-Server).

The assignment of a Foreign Agent is notified to the Mobile Node and to the Foreign Agent FA that is intended to provide the Mobile Node with a mobility service. This notification is dealt with by the Notification Part and the Home Agent Path Establishing Part HAPEP. The Foreign Agent need to be notified about the need for its services to the mobile node, the Foreign Agent has to be instructed to create a tunnel between the Foreign Agent and the Mobile Node's temporary address, and the mobile node has to be informed about the Foreign Agent that is offering the services to the Mobile Node. This notification can be performed in any number of ways e.g. The Home Agent can forward the registration request sent by the Mobile Node to the Foreign Agent using the tunnel that was created between the Home Agent and the Foreign Agent using HAPEP. The Foreign Agent reception part FARP receives the message and de-tunnels the data and assumes that the registration request was received from a Mobile Node and thereby the Control Part CP processes the registration request as per Mobile IP protocol. Another method to perform the notification is for the Home Agent to send a registration reply to the Foreign Agent in response to the registration request message that was sent by the Mobile Node to the Home Agent. In this case, the Foreign Agent does not receive a registration request message. This is a modification to the regular working of Mobile IP Foreign Agent implementation, since the Foreign Agent processes registration replies only if it had received a registration request from the Mobile Node. There are various other methods by which a Foreign Agent could be notified about the need for Foreign Agent services to a mobile node.

Along with the notification for Foreign Agent services to the Foreign Agent by the Home Agent, the Home Agent also instructs the Foreign Agent to create a tunnel between Foreign Agent and the Mobile Node's temporary address. Once the tunnel is created the Foreign Agent using FAPEP, the Foreign Agent forwards the registration reply to Mobile Node using the tunnel.

The Mobile Node on receiving the registration reply processes it and makes a note of the Foreign Agent's address which is nothing but the Mobile IP care-of-address of the Mobile Node.

Any Corresponding Node intending to send data towards the Mobile host may send the data similar to the situation that the Mobile Node resided in the Home Network, to the normal home internet protocol address. The Home Agent then intercepts data sent by a Corresponding Node and tunnel data towards the assigned Foreign Agent FA. The assigned Foreign Agent FA subsequently will tunnel the data directly towards the Mobile Node at the temporary assigned Internet Protocol address. The Mobile Node at receipt of the tunneled data, in its turn de-tunnels the data and processes this data.

In case of roaming towards a different Visited Network, Mobile Node MN acquires a temporary address from the new visited network as above described. Subsequently the Mobile Node MN sends a Message to the Foreign agent FA that was allocated to it, the message containing the new acquired temporary Internet Protocol address requesting tunnel creation between the Foreign Agent FA and the new temporary Internet Protocol address of the Mobile Node MN.
This message could be a modified registration request except the message is not forwarded all the way to the Home Agent HA but addressed to the Foreign Agent. The Foreign Agent then modifies its entry for the Mobile Node, and sets up a new tunnel between the Foreign Agent and the Mobile Node's new address and finally removes the old tunnel. The Foreign Agent FA sends a reply to the MN indicating the success.

With respect to the second embodiment a new network element is introduced, i.e. an Access Router. This Access Router is a Router located at the edge of the Visited Network VN and able to establish a path from the access Router AR towards the mobile Node MN.

The Access Router AR comprises an Access Router Path Establishing Part ARPEP for establishing a path between the Access Router AR and the Mobile Node MN based on forwarding information provided to the Access Router AR by the Mobile Node, Control Information Reception Part CIRP that is able to receive the forwarding information necessary for establishing a path between the Access Router and the Mobile Node and an Access Router Reception Part ARRP able to receive data sent by the Foreign Agent FA.

The Access Router Reception Part ARRP has an input-terminal that is at the same time an input-terminal I₅ of the Access Router AR. This Access Router Reception Part ARRP has an output-terminal that is coupled to an input-terminal of the Control Information Reception Part CIRP which in its turn is coupled with an output-terminal to an input-terminal of the Access Router Path Establishing Part ARPEP. This Access Router Path Establishing Part ARPEP has an output-terminal which is at the same time an output-terminal O₄ of the Access Router AR. Moreover, there is data connection between the Access Router Reception Part ARRP and the Access Router Path Establishing Part ARPEP. The Control Information Reception Part CIRP has an input-terminal that is at the same time an input-terminal I₆ of the Access Router AR.

The Foreign Agent FA is able to establish a path between the Foreign Agent FA and the Access Router AR based on the Internet Protocol Address of the Access Router, which is provided to the Foreign Agent FA via the Mobile Node MN. The Foreign agent FA provides routing services to the Mobile Node MN while the mobile node is registered with it. The Foreign Agent de-tunnels the datagrams tunnelled to it by the Mobile Node's Home Agent and delivers datagrams to the Access Router by using a tunnel that was set-up by the Foreign Agent between the Foreign Agent and the Access Router AR Internet Protocol Address.

In order to explain the operation of the second embodiment of the present invention, again it is assumed that the Mobile Node MN moves from the Home Network HN (see dashed line between MN and MN' in Fig. 1 (where MN' stands for the second location in the Visited Network VN)) towards the Visited network VN

The Mobile Node at reception of a router advertisement from the Access Router AR within the Visited Network VN creates an Access Router extension. The Mobile Node MN requests its Home Agent HA for assigning Foreign Agent service to the Mobile Node MN in the same way as was done in the first embodiment. This is done by using a MIP registration request with extension for Foreign Agent service request by the Mobile Node MN; the Mobile Node's home address is used as the source address of the registration request message. The Access Router extension is also added to the registration request, meaning that the Access Router destination address is incorporated in the registration request.

The Home Agent HA on receiving the registration request and after having authenticated the Mobile Node MN processes the Foreign Agent FA request. extension. The Foreign agent Assignment Entity then allocates a Foreign Agent. The Foreign Agent need to be notified about the need for its services to the mobile node, the Foreign Agent has to be instructed to create a tunnel between the Foreign Agent and the Access Router, and the mobile node has to be informed about the Foreign Agent that is offering the services to the Mobile Node. This notification can be performed in any number of ways e.g. The Home Agent can forward the registration request sent by the Mobile Node to the Foreign Agent using the tunnel that was created between the Home Agent and the Foreign Agent using HAPEP. The Foreign Agent reception part FARP receives the message and de-tunnels the data and assumes that the registration request was received from a Mobile Node and thereby the Control Part CP processes the registration request as per Mobile IP protocol. Another method to perform the notification is for the Home Agent to send a registration reply to the Foreign Agent in response to the registration request message that was sent by the Mobile Node to the Home Agent. In this case, the Foreign Agent does not receive a registration request message. This is a modification to the regular working of Mobile IP Foreign Agent implementation, since the Foreign Agent processes registration replies only if it had received a registration request from the Mobile Node. There are various other methods by which a Foreign Agent could be notified about the need for Foreign Agent services to a mobile node.

Along with the notification for Foreign Agent services to the Foreign Agent by the Home Agent, the Home Agent also instructs the Foreign Agent to create a tunnel between Foreign Agent and the Access Router. Once the tunnel is created the Foreign Agent using FAPEP, the Foreign Agent forwards the registration reply to Access Router using the tunnel.

The Access Router reception part ARRP on receiving the message from the Foreign Agent then de-tunnels the message and subsequently the ARPEP then forwards the registration reply through the appropriate interface to the Mobile Node. This appropriate interface is determined using the input of the control information reception part CIRP. This input is a reply of the Mobile Node on an advertisement of the Access router on a certain interface of the Access Router. Data to be forwarded from the Access Router towards the Mobile Node is done over this same interface. The Mobile Node on receiving the registration reply processes it and makes a note of the Foreign Agent's address which is nothing but the Mobile IP care-of-address of the Mobile Node. A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Internet Protocol mobility supporting method for supporting the roaming of a Mobile Node (MN) in a Mobile Internet Protocol Network from a home network (HN) towards a Visited Network (VN), said home network (HN) comprising a home agent (HA),said method comprising the step of:
a. forwarding a destination address towards said Home Agent (HA) by said Mobile Node (MN) at roaming of said Mobile Node (MN) from said home network (HN) to said visited network (VN1), **CHARACTERIZED IN THAT** said Mobile Internet Protocol Network excluding said visited network (VN) comprises a Foreign Agent (FA) and that said method further comprises the following steps of :
b. assigning said Foreign Agent (FA) to said Mobile Node (MN) by a Foreign Agent assigning entity (FAAE) at request of said Mobile node (MN);
c. Establishing a path between said Home Agent (HA) and said Foreign Agent by said Home Agent (HA); and
d. Establishing a path between said Foreign Agent (FA) and said Mobile Node (MN) by said Foreign Agent (FA) based on said destination address.

2. Internet Protocol mobility supporting system for supporting the roaming of a Mobile Node (MN) in a mobile Internet protocol Network from a home network (HN) towards a Visited Network (VN), said home network (HN) comprising a Home Agent (HA), said system comprising:
a. destination address forwarding part (DAFP), located in said Mobile Node (MN) and adapted to forward, at roaming of said Mobile Node (MN) from said home network (HN) to said visited network (VN), a destination address towards said home agent (HA); **CHARACTERIZED IN THAT** said Mobile Internet Protocol Network excluding said Visited Network (VN) comprises a Foreign Agent (FA) and that said system, further comprises the following parts:b. Foreign Agent Assigning Entity (FAAE), adapted to assign said Foreign Agent (FA) to said Mobile Node (MN) at request of said Mobile Node (MN);c. Home Agent path establishing part (HAPEP), located in said Home Agent (HA) and adapted to establish a path between said home agent (HA) and said Foreign Agent (FA); and Foreign Agent path establishing part (FAPEP), located in said Foreign Agent (FA) and adapted to establish a path between said Foreign Agent and said Mobile Node (MN) by said Foreign Agent (FA) based on said destination address.

3. Internet Protocol mobility supporting system according to claim 2, **CHARACTERIZED IN THAT** said destination address is an Internet Protocol address of said Mobile Node (MN), said address being a temporary address, assigned by a Dynamic Host Control Protocol server of said visited network (VN).

4. Internet Protocol mobility supporting system according to claim 2, **CHARACTERIZED IN THAT** said destination address is the Internet Protocol address of an Access Router (AR) at the edge of said visited network, said access router (AR) being adapted to establish a path between said access router (AR) and said Mobile Node (MN) based on forwarding information provided to said Access Router (AR) by said Mobile Node (MN).

5. Mobile Node (MN) for use in a Internet Protocol mobility supporting system for supporting the roaming of said Mobile Node (MN) in a Mobile Internet Protocol Network from a Home Network (HN) towards a Visited Network (VN), said Home Network (HN) comprising a Home Agent (HA), said Mobile Node (MN) being connected to said mobile Home Network (HN), **CHARACTERIZED IN THAT** said Mobile Node (MN) comprises a Foreign Agent Assignment requesting part (FAARP), adapted to request, at detection of entry of said Mobile Node in said Visited Network (VN), a Foreign Agent assigning entity (FAAE) of said Home network (HN) to assign a Foreign Agent (FA) to said Mobile Node (MN).

6. Foreign Agent assigning entity (FAAE) for use in a Internet Protocol mobility supporting system for supporting the roaming of a Mobile Node (MN) in a Mobile Internet Protocol Network from a home network (HN) towards a Visited Network (VN), said Home Network (HN) comprising a Home Agent (HA), said Mobile Node (MN) being connected to said mobile Home Network (HN), said Foreign Agent assigning entity (FAAE) comprising the following parts:
a. a Foreign Agent Assignment request reception part (FAARRP), adapted to receive a request for service of a Foreign Agent (FA) of said Mobile Node (MN);
b. a Foreign Agent Assigning part (FAAP), coupled with an input to an output of said Foreign Agent Assignment request reception part (FAARRP) and adapted to assign a Foreign Agent to said Mobile Node (MN) at reception of said request for service of a foreign agent (FA) of said Mobile Node (MN); and
c. a notification part (NP), coupled with an input to an output of said Foreign Agent Assigning Part (FAAP), and adapted to notify said Foreign Agent (FA) of an assignment of said Foreign Agent (FA) for providing Foreign Agent service to said Mobile Node (MN).

7. Foreign Agent assigning entity (FAAE) according to claim 6, **CHARACTERIZED IN THAT** said Foreign Agent assigning entity (FAAE) further comprises a Foreign Agent holding part (FAHP) adapted to hold a list comprising at least one Foreign Agent (FA); and
that said Foreign Agent Assigning part (FAAP) is coupled to said Foreign Agent Holding Part (FAHP) and is further adapted to select said Foreign Agent (FA) to be assigned from said Foreign Agent Holding Part (FAHP).

8. Foreign Agent assigning entity (FAAE) according to claim 6, **CHARACTERIZED IN THAT** said Foreign Agent assigning entity (FAAE) is further adapted to assign a Foreign Agent (FA) provided via an Authorisation Authentication Accounting-Server (AAAS).

9. Home agent (HA) for use in a Internet Protocol mobility supporting system for supporting the roaming of said Mobile Node (MN) in a Mobile Internet Protocol Network from a Home Network (HN) towards a Visited Network (VN), said Home Network (HN) comprising said Home Agent (HA), said Mobile Node (MN) being connected to said mobile Home Network (HN), **CHARACTERIZED IN THAT** said Home Agent (HA) comprises a Foreign Agent Assigning Entity (FAAE) according any of the claims 6 to 8 and that said Home Agent (HA) further comprises a Home Agent Path Establishing Part (HAPEP), coupled with an output to an input of said Foreign Agent Assigning Entity (FAAE) and adapted to establish a connection between said home agent (HA) and said assigned Foreign Agent (FA).

10. Foreign Agent (FA) for use in a Internet Protocol mobility supporting system for supporting the roaming of a Mobile Node (MN) in a Mobile Internet Protocol Network from a Home Network (HN) towards a Visited Network (VN), said Home Network (HN) comprising a Home Agent (HA) and said Mobile Node (MN) being connected to said Home Network (HN), said Foreign Agent (FA) comprising:
a. a Foreign Agent Reception Part (FARP), adapted to receive data from said Home Agent (HA), **CHARACTERIZED IN THAT** said Foreign Agent (FA) is included in said mobile Internet protocol Network excluding said visited network (VN), and that said Foreign Agent comprises:
b. a Control Part (CP), coupled with an input to an output of said Foreign Agent Reception Part (FARP) and adapted to determine a destination address from said data sent by said home agent (HA); Foreign Agent Path Establishing Part (FAPEP), coupled with an input to an output of said Control Part (CP), and adapted to establish a path between said Foreign Agent (FA) and said Mobile Node (MN) based on said destination address.

11. Foreign Agent (FA) according to claim 10, **CHARACTERIZED IN THAT** said Foreign Agent Path Establishing Part (FAPEP) is adapted to establish a connection between said Foreign Agent (FA) and said Mobile Node (MN) where said destination address is a Internet protocol address assigned to said Mobile Node (MN).

12. Foreign Agent (FA) according to claim 10, **CHARACTER!ZED IN THAT** said Foreign Agent connection establishing part (FACEP), is adapted to establish a connection between said Foreign Agent (FA) and an Access Router (AR) at the edge of said Visited Network (VN) where said destination address is a Internet Protocol address assigned to said Access Router (AR).

## Patentansprüche

1. Internet Protocol Mobilitäts-Unterstützungsverfahren zur Unterstützung des Roaming eines Mobilknotens (MN) in einem Mobile Internet Protocol-Netzwerk von einem Heimnetzwerk ("Home Network", HN) zu einem besuchten Netzwerk ("Visited Network", VN), wobei dieses Heimnetzwerk (HN) einen Home Agent (HA) umfasst und wobei dieses Verfahren den folgenden Schritt umfasst:
a. Weiterleiten einer Zieladresse zu diesem Home Agent (HA) durch diesen Mobilknoten (MN) beim Roaming dieses Mobilknotens (MN) von diesem Heimnetzwerk (HN) in dieses besuchte Netzwerk (VN1); **DADURCH GEKENNZEICHNET, DASS** dieses Mobile Internet Protocol-Netzwerk ohne dieses besuchte Netzwerk (VN) einen Foreign Agent (FA) umfasst und dass dieses Verfahren des Weiteren die folgenden Schritte umfasst:
b. Zuweisen dieses Foreign Agent (FA) zu diesem Mobilknoten (MN) durch eine Foreign Agent Zuordnungseinheit ("Foreign Agent Assigning Entity", FAAE) auf Anforderung von diesem Mobilknoten (MN);
c. Einrichten eines Pfads zwischen diesem Home Agent (HA) und diesem Foreign Agent durch diesen Home Agent (HA); und
d. Einrichten eines Pfads zwischen diesem Foreign Agent (FA) und diesem Mobilknoten (MN) durch diesen Foreign Agent (FA) auf der Basis dieser Zieladresse.

2. Internet Protocol Mobilitäts-Unterstützungssystem zur Unterstützung des Roaming eines Mobilknotens (MN) in einem Mobile Internet Protocol-Netzwerk von einem Heimnetzwerk ("Home Network", HN) zu einem besuchten Netzwerk ("Visited Network", VN), wobei dieses Heimnetzwerk (HN) einen Home Agent (HA) umfasst und wobei dieses System Folgendes umfasst:
a) Zieladress-Weiterleitungsteil ("Destination Address Forwarding Part", DAFP), in diesem Mobilknoten (MN) angeordnet und angepasst zur Weiterleitung einer Zieladresse an diesen Home Agent (HA) beim Roaming dieses Mobilknotens (MN) von diesem Heimnetzwerk (HN) in dieses besuchte Netzwerk; **DADURCH GEKENNZEICHNET, DASS** dieses Mobile Internet Protocol-Netzwerk ohne dieses besuchte Netzwerk (VN) einen Foreign Agent (FA) umfasst und dass dieses System des Weiteren die folgenden Teile umfasst: b) Foreign Agent Zuordnungseinheit ("Foreign Agent Assigning Entity", FAAE), angepasst zum Zuordnen dieses Foreign Agent (FA) zu diesem Mobilknoten (MN) auf Anforderung dieses Mobilknotens (MN); c) Home Agent Pfadeinrichtungsteil ("Home Agent Path Establishing Part", HAPEP), angeordnet in diesem Home Agent (HA) und angepasst zum Einrichten eines Pfads zwischen diesem Home Agent (HA) und diesem Foreign Agent (FA); und d) Foreign Agent Pfadeinrichtungsteil ("Foreign Agent Path Establishing Part", FAPEP), angeordnet in diesem Foreign Agent (FA) und angepasst zum Einrichten eines Pfads zwischen diesem Foreign Agent und diesem Mobilknoten (MN) durch diesen Foreign Agent (FA) auf der Basis dieser Zieladresse.

3. Internet Protocol Mobilitätsunterstützungssystem gemäß Anspruch 2, **DADURCH GEKENNZEICHNET, DASS** diese Zieladresse eine Internet Protocol-Adresse dieses Mobilknotens (MN) ist, wobei diese Adresse eine temporäre Adresse ist, die von einem Dynamic Host Control Protocol Server dieses besuchten Netzwerks (VN) zugeordnet wurde.

4. Internet Protocol Mobilitätsunterstützungssystem gemäß Anspruch 2, **DADURCH GEKENNZEICHNET, DASS** diese Zieladresse die Internet Protocol-Adresse eines Zugriffs-Routers ("Access Router", AR) am Rand des besuchten Netzwerks ist, wobei dieser Zugriffs-Router (AR) angepasst ist zum Einrichten eines Pfads zwischen diesem Zugriffs-Router (AR) und diesem Mobilknoten (MN) auf der Basis der Weiterleitungsinformationen, die diesem Zugriffs-Router von diesem Mobilknoten (MN) bereitgestellt wurden.

5. Mobilknoten (MN) zur Verwendung in einem Internet Protocol Mobilitätsunterstützungssystem zur Unterstützung des Roaming dieses Mobilknotens (MN) in einem Mobile Internet Protocol-Netzwerk von einem Heimnetzwerk (HN) in ein besuchtes Netzwerk (VN), wobei dieses Heimnetzwerk (HN) einen Home Agent (HA) umfasst und wobei dieser Mobilknoten (MN) mit diesem Mobil-Heimnetzwerk (HN) verbunden ist, **DADURCH GEKENNZEICHNET, DASS** dieser Mobilknoten (MN) ein Foreign Agent Zuordnungs-Anforderungsteil ("Foreign Agent Assignment Part", FAARP) umfasst, das so angepasst ist, dass es beim Erkennen des Eintritts dieses Mobilknotens in dieses besuchte Netzwerk (VN) eine Foreign Agent Zuordnungseinheit ("Foreign Agent Assignment Entity", FAAE) dieses Heimnetzwerks (HN) auffordert, diesem Mobilknoten (MN) einen Foreign Agent (FA) zuzuordnen.

6. Foreign Agent Zuordnungseinheit (FAAE) zur Verwendung in einem Internet Protocol Mobilitätsunterstützungssystem zur Unterstützung des Roaming eines Mobilknotens (MN) in einem Mobile Internet Protocol-Netzwerk von einem Heimnetzwerk (HN) in ein besuchtes Netzwerk (VN), wobei dieses Heimnetzwerk (HN) einen Home Agent (HA) umfasst und dieser Mobilknoten (MN) mit diesem Mobil-Heimnetzwerk (HN) verbunden ist und wobei die Foreign Agent Zuordnungseinheit (FAAE) die folgenden Teile umfasst:
a. ein Foreign Agent Zuordnungsanforderungs-Empfangsteil (FAARRP), das so angepasst ist, dass es eine Dienstanforderung eines Foreign Agent (FA) dieses Mobilknotens (MN) empfängt;
b. ein Foreign Agent Zuordnungsteil (FAAP), gekoppelt über einen Eingang mit einem Ausgang dieses Foreign Agent Zuordnungsanforderungs-Empfangsteils (FAARRP) und so angepasst, dass es beim Empfang dieser Dienstanforderung eines Foreign Agent (FA) dieses Mobilknotens (MN) diesem Mobilknoten (MN) einen Foreign Agent zuordnet; und
c. ein Benachrichtigungsteil (NP), gekoppelt über einen Eingang mit einem Ausgang dieses Foreign Agent Zuordnungsteils (FAAP) und so angepasst, dass es diesen Foreign Agent (FA) über eine Zuordnung dieses Foreign Agent (FA) zur Bereitstellung des Foreign Agent-Dienstes an diesen Mobilknoten (MN) benachrichtigt.

7. Foreign Agent Zuordnungseinheit (FAAE) gemäß Anspruch 6, **DADURCH GEKENNZEICHNET, DASS** diese Foreign Agent Zuordnungseinheit (FAAE) des Weiteren ein Foreign Agent Speicherungsteil ("Foreign Agent Holding Part", FAHP) umfasst, das angepasst ist zum Speichern einer Liste mit mindestens einem Foreign Agent (FA); und
dass dieses Foreign Agent Zuordnungsteil (FAAP) gekoppelt ist mit diesem Foreign Agent Speicherteil (FAHP) und des Weiteren so angepasst ist, dass es diesen Foreign Agent (FA) für die Zuordnung von diesem Foreign Agent Speicherteil (FAHP) auswählt.

8. Foreign Agent Zuordnungseinheit (FAAE) gemäß Anspruch 6, **DADURCH GEKENNZEICHNET, DASS** diese Foreign Agent Zuordnungseinheit (FAAE) des Weiteren angepasst ist zum Zuordnen eines über einen Autorisierungs-, Authentifizierungs-und Abrechnungs-Server ("Authorisation Authentication Accounting-Server", AAAS) bereitgestellten Foreign Agent (FA).

9. Home Agent (HA) zur Verwendung in einem Internet Protocol Mobilitätsunterstützungssystem zur Unterstützung des Roaming dieses Mobilknotens (MN) in einem Mobile Internet Protocol-Netzwerk von einem Heimnetzwerk (HN) in ein besuchtes Netzwerk (VN), wobei dieses Heimnetzwerk (HN) diesen Home Agent (HA) umfasst und wobei dieser Mobilknoten (MN) mit diesem Mobil-Heimnetzwerk (HN) verbunden ist, **DADURCH GEKENNZEICHNET, DASS** dieser Home Agent (HA) eine Foreign Agent Zuordnungseinheit (FAAE) gemäß den Ansprüchen 6 bis 8 umfasst und dass dieser Home Agent (HA) des Weiteren ein Home Agent Pfadeinrichtungsteil (HAPEP) umfasst, das über einen Ausgang mit einem Eingang dieser Foreign Agent Zuordnungseinheit (FAAE) verbunden ist und das so angepasst ist, dass es eine Verbindung zwischen diesem Home Agent (HA) und diesem zugeordneten Foreign Agent (FA) einrichtet.

10. Foreign Agent (FA) zur Verwendung in einem Internet Protocol Mobilitätsunterstützungssystem zur Unterstützung des Roaming eines Mobilknotens (MN) in einem Mobile Internet Protocol-Netzwerk von einem Heimnetzwerk (HN) in ein besuchtes Netzwerk (VN), wobei dieses Heimnetzwerk (HN) einen Home Agent (HA) umfasst und dieser Mobilknoten (MN) mit diesem Heimnetzwerk (HN) verbunden ist, und wobei dieser Foreign Agent Folgendes umfasst:
a. ein Foreign Agent-Empfangsteil (FARP), das angepasst ist zum Empfangen von Daten von diesem Home Agent (HA), **DADURCH GEKENNZEICHNET, DASS** dieser Foreign Agent (FA) in diesem Mobile Internet Protocol-Netzwerk ohne dieses besuchte Netzwerk (VN) enthalten ist und dass dieser Foreign Agent Folgendes umfasst:
b. ein Steuerungsteil (CP), gekoppelt über einen Eingang mit einem Ausgang dieses Foreign Agent-Empfangsteils (FARP) und so angepasst, dass es eine Zieladresse dieser von diesem Home Agent (HA) gesendeten Daten ermittelt; c. ein Foreign Agent Pfadeinrichtungsteil (FAPEP), gekoppelt über einen Eingang mit einem Ausgang dieses Steuerungsteils (CP) und so angepasst, dass es auf der Basis dieser Zieladresse einen Pfad zwischen diesem Foreign Agent (FA) und diesem Mobilknoten (MN) einrichtet.

11. Foreign Agent (FA) gemäß Anspruch 10, **DADURCH GEKENNZEICHNET, DASS** dieses Foreign Agent Pfadeinrichtungsteil (FAPEP) angepasst ist zum Einrichten einer Verbindung zwischen diesem Foreign Agent (FA) und diesem Mobilknoten (MN), wobei diese Zieladresse eine Internet Protocol-Adresse ist, die diesem Mobilknoten (MN) zugeordnet wurde.

12. Foreign Agent (FA) gemäß Anspruch 10, **DADURCH GEKENNZEICHNET, DASS** dieses Foreign Agent Verbindungseinrichtungsteil (FACEP) angepasst ist zum Einrichten einer Verbindung zwischen diesem Foreign Agent (FA) und einem Zugriffs-Router (AR) am Rand dieses besuchten Netzwerks (VN), wobei diese Zieladresse eine Internet Protocol-Adresse ist, die diesem Zugriffs-Router (AR) zugeordnet wurde.

## Revendications

1. Procédé de support de mobilité IP pour supporter l'itinérance d'un noeud mobile (MN) dans un réseau de protocole Internet mobile depuis un réseau de rattachement (HN) vers un réseau visité (VN), ledit réseau de rattachement (HN) comprenant un agent de rattachement (HA), ledit procédé comprenant l'étape consistant à :
a. réacheminer une adresse de destination vers ledit agent de rattachement (HA) par ledit noeud mobile (MN) lors du déplacement dudit noeud mobile (MN) dudit réseau de rattachement (HN) vers ledit réseau visité (VN1),
**caractérisé en ce que** ledit réseau de protocole Internet mobile, à l'exclusion dudit réseau visité (VN), comprend un agent étranger (FA) et que ledit procédé comprend en outre les étapes suivantes consistant à :
b. attribuer ledit agent étranger (FA) au dit noeud mobile (MN) par une entité d'attribution d'agent étranger (FAAE) sur la demande dudit noeud mobile (MN) ;
c. établir un chemin entre ledit agent de rattachement (HA) et ledit agent étranger par ledit agent de rattachement (HA); et
d. établir un chemin entre ledit agent étranger (FA) et ledit noeud mobile (MN) par ledit agent étranger (FA) sur la base de ladite adresse de destination.

2. Système de support de mobilité de protocole Internet destiné à supporter l'itinérance d'un noeud mobile (MN) dans un réseau de protocole MIP depuis un réseau de rattachement (HN) vers un réseau visité (VN), ledit réseau de rattachement (HN) comprenant un agent de rattachement (HA), ledit système comprenant :
a. une partie de réacheminement d'adresse de destination (DAFP), située dans ledit noeud mobile (MN) et adapté pour réacheminer, lors du déplacement dudit noeud mobile (MN) dudit réseau de rattachement (HN) vers ledit réseau visité (VN), une adresse de destination vers ledit agent de rattachement (HA) ;
**caractérisé en ce que** ledit réseau de protocole Internet mobile à l'exclusion dudit réseau visité (VN) comprend un agent étranger (FA) et que ledit système comprend en outre les parties suivantes :
b. une entité d'attribution d'agent étranger (FAAE), adaptée pour attribuer ledit agent étranger (FA) au dit noeud mobile (MN) sur la demande dudit noeud mobile (MN);
c. une partie d'établissement de chemin à l'agent de rattachement (HAPEP), située dans ledit agent de rattachement (HA) et adaptée pour établir un chemin entre ledit agent de rattachement (HA) et ledit agent étranger (FA); et
d. une partie d'établissement de chemin à un agent étranger (FAPEP), située dans ledit agent étranger (FA) et adaptée pour établir un chemin entre ledit agent étranger et ledit noeud mobile (MN) par ledit agent étranger (FA) sur la base de ladite adresse de destination.

3. Système pour supporter la mobilité de protocole Internet selon la revendication 2, **caractérisé en ce que** ladite adresse de destination est une adresse IP dudit noeud mobile (MN), ladite adresse étant une adresse provisoire, attribuée par un serveur DCHP dudit réseau visité (VN).

4. Système pour supporter la mobilité de protocole Internet selon la revendication 2, **caractérisé en ce que** ladite adresse de destination est l'adresse IP d'un routeur d'accès (AR) à la périphérie dudit réseau visité, ledit routeur d'accès (AR) étant adapté pour établir un chemin entre ledit routeur d'accès (AR) et ledit noeud mobile (MN) sur la base des informations de réacheminement fournies au dit routeur d'accès (AR) par ledit noeud mobile (MN).

5. Noeud mobile (MN) à utiliser dans un système pour supporter la mobilité de protocole Internet destiné à supporter l'itinérance dudit noeud mobile (MN) dans un réseau de protocole Internet mobile depuis un réseau de rattachement (HN) vers un réseau visité (VN), ledit réseau de rattachement (HN) comprenant un agent de rattachement (HA), ledit noeud mobile (MN) étant connecté au dit réseau de rattachement mobile (HN), **caractérisé en ce que** ledit noeud mobile (MN) comprend une partie de demande d'attribution d'agent étranger (FAARP), adaptée pour demander, lors de la détection de l'entrée dudit noeud mobile dans ledit réseau visité (VN), une entité d'attribution d'agent étranger (FAAE) dudit réseau de rattachement (HN) afin d'attribuer un agent étranger (FA) au dit noeud mobile (MN).

6. Entité d'attribution d'agent étranger (FAAE) à utiliser dans un système pour supporter la mobilité de protocole Internet destinée à supporter l'itinérance d'un noeud mobile (MN) dans un réseau de protocole Internet mobile depuis un réseau de rattachement (HN) vers un réseau visité (VN), ledit réseau de rattachement (HN) comprenant un agent de rattachement (HA), ledit noeud mobile (MN) étant connecté au dit réseau de rattachement mobile (HN), ladite entité d'attribution d'agent étranger (FAAE) comprenant les parties suivantes :
a. une partie de réception de demande d'attribution d'agent étranger (FAARRP), adaptée pour recevoir une demande concernant un service d'un agent étranger (FA) dudit noeud mobile (MN) ;
b. une partie d'attribution d'agent étranger (FAAP), couplée par une entrée à une sortie de ladite partie de réception de demande d'attribution d'agent étranger (FAARRP) et adaptée pour attribuer un agent étranger au dit noeud mobile (MN) à la réception de ladite demande de service d'un agent étranger (FA) dudit noeud mobile (MN) ; et
c. une partie de notification (NP), couplée par une entrée à une sortie de ladite partie d'attribution d'agent étranger (FAAP), et adaptée pour notifier au dit agent étranger (FA) une attribution dudit agent étranger (FA) afin de fournir un service d'agent étranger au dit noeud mobile (MN).

7. Entité d'attribution d'agent étranger (FAAE) selon la revendication 6, **caractérisée**
**en ce que** ladite entité d'attribution d'agent étranger (FAAE) comprend en outre une partie de stockage d'agents étrangers (FAHP) adaptée pour stocker une liste comprenant au moins un agent étranger (FA); et
**en ce que** ladite partie d'attribution d'agent étranger (FAHP) est couplée à ladite partie de stockage d'agents étrangers (FAHP) et est en outre adaptée pour sélectionner ledit agent étranger (FA) à attribuer à partir de ladite partie de stockage d'agents étrangers (FAHP).

8. Entité d'attribution d'agent étranger (FAAE) selon la revendication 6, **caractérisée en ce que** ladite entité d'attribution d'agent étranger (FAAE) est en outre adaptée pour attribuer un agent étranger (FA) fourni par le biais d'un serveur d'autorisation, authentification et comptabilité AAA.

9. Agent de rattachement (HA) à utiliser dans un système pour supporter la mobilité de protocole Internet destiné à supporter l'itinérance dudit noeud mobile (MN) dans un réseau de protocole Internet mobile depuis un réseau de rattachement (HN) vers un réseau visité (VN), ledit réseau de rattachement (HN) comprenant ledit agent de rattachement (HA), ledit noeud mobile (MN) étant connecté audit réseau de rattachement mobile (HN), **caractérisé en ce que** ledit agent de rattachement (HA) comprend une entité d'attribution d'agent étranger (FAAE) selon l'une quelconque des revendications 6 à 8 et **en ce que** ledit agent de rattachement (HA) comprend en outre une partie d'établissement de chemin à l'agent de rattachement (HAPEP), couplée par une sortie à une entrée de ladite entité d'attribution d'agent étranger (FAAE) et adaptée pour établir une connexion entre ledit agent de rattachement (HA) et ledit agent étranger attribué (FA).

10. Agent étranger (FA) à utiliser dans un système pour supporter la mobilité de protocole Internet destiné à supporter l'itinérance d'un noeud mobile (MN) dans un réseau de protocole Internet mobile depuis un réseau de rattachement (HN) vers un réseau visité (VN), ledit réseau de rattachement (HN) comprenant un agent de rattachement (HA) et ledit noeud mobile (MN) étant connecté au dit réseau de rattachement (HN), ledit agent étranger (FA) comprenant :
a. une partie de réception d'agent étranger (FARP), adaptée pour recevoir des données dudit agent de rattachement (HA),
**caractérisé en ce que** ledit agent étranger (FA) est compris dans ledit réseau de protocole MIP à l'exclusion dudit réseau visité (VN), et **en ce que** ledit agent étranger comprend:
b. une partie de commande (CP), couplée par une entrée à une sortie de ladite partie de réception d'agent étranger (FARP) et adaptée pour déterminer une adresse de destination à partir des desdites données envoyées par ledit agent de rattachement (HA);
c. une partie d'établissement de chemin à l'agent étranger (FAPEP), couplée par une entrée à une sortie de ladite partie de commande (CP) et adaptée pour établir un chemin entre ledit agent étranger (FA) et ledit noeud mobile (MN) sur la base de ladite adresse de destination.

11. Agent étranger (FA) selon la revendication 10, **caractérisé en ce que** ladite partie d'établissement de chemin à l'agent étranger (FAPEP) est adaptée pour établir une connexion entre ledit agent étranger (FA) et ledit noeud mobile (MN), ladite adresse de destination étant une adresse IP attribuée au dit noeud mobile (MN).

12. Agent étranger (FA) selon la revendication 10, **caractérisé en ce que** ladite partie établissant une connexion à l'agent étranger (FACEP) est adaptée pour établir une connexion entre ledit agent étranger (FA) et un routeur d'accès (AR) à la périphérie dudit réseau visité (VN), ladite adresse de destination étant une adresse IP attribuée au dit routeur d'accès (AR).
